(19) Europäisches Patentamt
European Patent Office
Office européen des brevets

(11) **EP 4 643 569 B1**

(12) **EUROPEAN PATENT SPECIFICATION**

(45) Date of publication and mention
of the grant of the patent:
**08.04.2026  Bulletin 2026/15**

(21) Application number: **24720863.0**

(22) Date of filing: **17.04.2024**

(51) International Patent Classification (IPC):
**H04W 24/02** (2009.01)       **H04W 36/00** (2009.01)

(52) Cooperative Patent Classification (CPC):
**H04W 36/00835; H04W 24/02**

(86) International application number:
**PCT/FI2024/050182**

(87) International publication number:
**WO 2024/218437 (24.10.2024 Gazette 2024/43)**

(54) **NEIGHBOUR RELATIONS IN CELLULAR COMMUNICATION NETWORKS**

NACHBARBEZIEHUNGEN IN ZELLULAREN KOMMUNIKATIONSNETZEN

RELATIONS DE VOISINAGE DANS RÉSEAUX DE COMMUNICATION CELLULAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **20.04.2023  FI 20235444**

(43) Date of publication of application:
**05.11.2025  Bulletin 2025/45**

(73) Proprietor: **Elisa Oyj**
**00520 Helsinki (FI)**

(72) Inventor: **VOROPAEVA, Anastasiia**
**00520 Helsinki (FI)**

(74) Representative: **Laine IP Oy**
**Porkkalankatu 24**
**00180 Helsinki (FI)**

(56) References cited:
**EP-A1- 3 979 688       US-A1- 2005 148 368**
**US-A1- 2007 242 622    US-A1- 2009 124 262**
**US-A1- 2011 201 332    US-A1- 2015 148 042**

## Description

FIELD

The present disclosure relates to cellular communication networks and more specifically, to neighbour relations in such networks.

BACKGROUND

Communication networks may comprise at least core networks and, in some networks, also Radio Access Networks, RANs. For example, cellular communication networks comprise a core network tasked with functions affecting the network as a whole, while a RAN enables connectivity to the network to subscribers with User Equipments, UEs, furnished with radio communication capabilities. Assessment of neighbour relations is needed to improve or maintain performance of a cellular communication network, so that the network would operate as well as possible. There is therefore a need in general to provide enhancements for assessment of neighbour relations, to enable efficient usage of the network and its resources.

US 2007/242622 A1 concerns a method and device for determining a list of at least one first node of a telecommunication network to which, a message received by a second node of the telecommunication network from a third node of the telecommunication network, has to be transferred. US 2011/201332 A1 presents methods and arrangements for improving the selection of neighbor cells, on which to perform measurements in different situations. US 2015/148042 A1 presents methods, user equipment and target base station for supporting update of neighbour cell relations in a cellular communications network. EP 3 979 688 A1 discloses a method and apparatus for determining an inter-frequency adjacent area.

SUMMARY

According to some aspects, there is provided the subject-matter of the independent claims. Some embodiments are defined in the dependent claims.

BRIEF DESCRIPTION OF THE DRAWINGS

FIGURE 1 illustrates an example of a cellular communication network in accordance with at least some embodiments;
FIGURE 2 illustrates an example of a network scenario in accordance with at least some embodiments;
FIGURE 3 illustrates an example apparatus capable of supporting at least some embodiments;
FIGURE 4a illustrates an example of a first list in accordance with at least some embodiments;
FIGURE 4b illustrates an example of a second list in accordance with at least some embodiments;
FIGURE 4c illustrates an example of a combined list in accordance with at least some embodiments; and
FIGURE 5 is a flow graph of a method in accordance with a claimed embodiment.

EMBODIMENTS

Assessment and configuration of neighbour relations in cellular communication networks may be enhanced by the procedures described herein. More specifically, enhanced assessment of neighbour relations is enabled by exploiting a combined list of neighbour relations for configuring the relations. The combined list may comprise information about neighbour relations from both perspectives, from the perspective of a first cell and from the perspective of target cells. Said information may comprise total priority indices of neighbour relations between each of said target cells and the first cell, i.e., outgoing and incoming directions, thereby enabling removal of only those neighbour relations that are irrelevant from both directions. Also, it may be ensured that important relations are not be removed. Hence, assessment of neighbour relations can be enhanced in general, to enable efficient usage of the network and its resources.

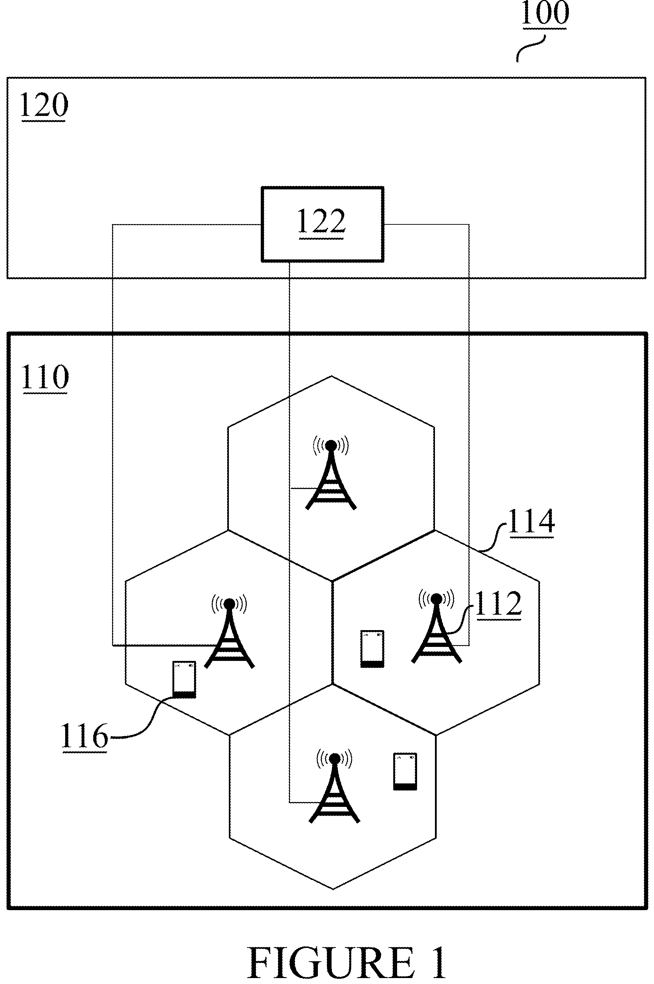

FIGURE 1 illustrates an example of a cellular communication network in accordance with at least some embodiments. FIGURE 1 illustrates cellular communication network 100 comprising Radio Access Network, RAN, 110 and core network 120. RAN 110 further comprises multiple Base Stations, BSs, 112. BSs 112 are configured to operate in accordance with a cellular communication standard, such as Long Term Evolution, LTE, or fifth generation, 5G, also known as New Radio, NR, both as specified by the 3rd Generation Partnership Project, 3GPP. Each BS 112 is associated with at least one cell 114. That is, each BS 112 is configured provide at least one cell 114 for communication. In cellular communication network 100 illustrated in FIGURE 1, each BS 112 provides one cell for communication. In some embodiments, each BS 112 may provide for example three cells for communication, wherein said three cells provide coverage with an angle of 120 degrees using different frequencies.

RAN 110 further comprises one or more User Equipments, UEs, 116. BSs 112 communicates with UEs 116 over air interface wirelessly using radio communications, within cells 114. Each UE 116 comprises or is incorporated into, for example, a smartphone, feature phone, tablet or laptop computer, Internet-of-Things, IoT, node, smart wearable or a connected car connectivity module, for example. Naturally, separate UEs 116 need not be of a same type.

BSs 112 of RAN 110 are coupled with core network nodes of core network 120 via links, which may comprise wireline connections, for example. A few of such links are illustrated in FIGURE 1. Core network 120 comprises for example Mobility Management Entities, MMEs, serving gateways and/or Access and Mobility management Functions, AMFs. The core network may comprise a gateway, enabling communication with further networks, via at least one inter-network link. Some aggregate networks may have more than one core network, which are then connected to each other using at least one communication link.

Core network 120 illustrated in FIGURE 1 further comprises apparatus 122. Apparatus 122 may be configured to monitor cellular communication network 100, in particularly RAN 110. Apparatus 122 may be configured to perform actions to optimize the operation of RAN 110. For instance, apparatus 122 may be an apparatus for network optimization of RAN 110, like for assessing neighbour relations between cells 114 in RAN 110. In some embodiments, apparatus 122 may be located in RAN 110 or outside of cellular communication network 100.

In some embodiments, apparatus 122 may be a control device configured to control one BS 112. For instance, apparatus 122 may be configured to operate as an Automatic Neighbour Relations, ANR, function for at least one cell of one BS 112. For instance, apparatus 122 may reside in one BS 112, or be associated with one BS 112, and manage Neighbour Relation Table, NRT, of one cell of one BS 112. Apparatus 122 may be further configured to determine neighbour cells of said one cell. Apparatus 122 may store a list of the neighbour cells of said one cell to its memory and add new cells to the list when found. Alternatively, or in addition, apparatus 122 may remove cells from the list when needed.

Various changes may take place in RAN 110. For example, the topology of RAN 110 may change often due to addition of new neighbour relations between cells 114, building new sites, etc. Apparatus 122 may hence monitor RAN 110 and the performance of RAN 110. Neighbour relations of a cell might change over time. The changes in the topology of RAN 110 may introduce new neighbour relations, for example there may be less relevant neighbours and some old neighbour cells may be need to be replaced with more relevant cells, etc.

To keep only relevant neighbour relations, all neighbour relations should be revised from time to time. Relevancy of neighbour relations may be identified for example based on various Performance Management, PM, counters, like based on the number of handover events. When an irrelevant relation is removed, it may be replaced with a more significant relation. In some embodiments, the number of neighbours may be limited, e.g., to a maximum of 32 neighbours due to software/hardware limitations, and therefore the number of neighbour relations and their quality should be closely monitored and assessed. The removal may cause service degradation though, and worsen customers' experience, if not handled well. Embodiments of the present disclosure there enable ensuring that when removal of a neighbour relation is considered, it can be also taken into account that the neighbour relation to be removed is irrelevant from a first cell to a target cell (outgoing direction), and also from the target cell to the first cell (incoming direction).

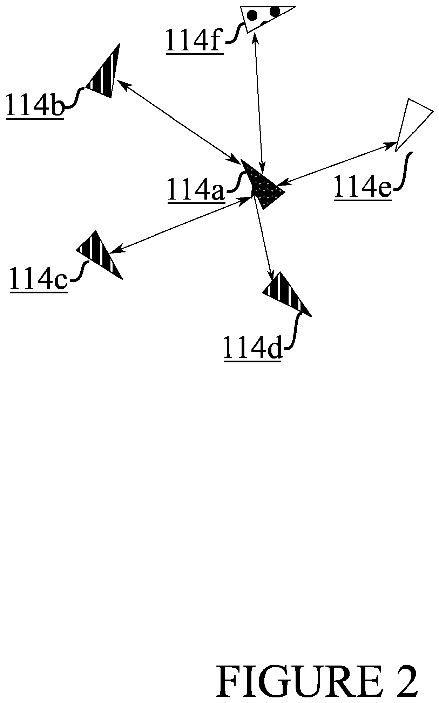

FIGURE 2 illustrates an example of a network scenario in accordance with at least some embodiments. In FIGURE 2, cells 114a-f of a cellular communication network are illustrated. Cell 114a is a first cell and cells 114b-f are target cells. More specifically, target cells 114b-d are cells that belong to a list of neighbour cells of first cell 114a. Target cell 114e is a cell that used to belong to the list of neighbour cells of first cell 114a, but should not belong to the list after a change, e.g., due to a change in the network topology. That is, target cell 114e is to be removed from the list. Target cell 114f is a new neighbour cell of first cell 114a. That is, target cell 114f is to be added to the list. Target cells 114b-f may be neighbour cells of target cell 114a, possibly within one hop from first cell 114a.

At a first step, apparatus 122 determines first cell 114a and target cells 114b-f of first cell 114a. Apparatus 122 may for example determine neighbour cells 114b-f of first cell 114a with the help of UEs 116, based on performance data from an Operations Support System, OSS, and/or based on data provided by neighbour cells.

At a second step, apparatus 122 determines a first list of neighbour relations, wherein the first list comprises priority indices of neighbour relations from first cell 114a to each of target cells 114b-f. The first list may thus comprise for example outgoing neighbour relations of first cell 114a. That is, apparatus 122 may assess all neighbour relations from first cell 114a, e.g., based on a number of handover events from first cell 114a to each of target cells 114b-f (outgoing direction). For instance, apparatus 122 may assign a priority index $X^{out}_{source \rightarrow target}$ to each of the neighbour relations based on their importance in descending order (high index → less important neighbour).

At a third step, apparatus 122 determines a second list of neighbour relations, wherein the second list comprises priority indices of neighbour relations from each of target cells 114b-f to first cell 114a. The second list may thus comprise incoming neighbour relations of first cell 114a. That is, apparatus 122 may assess all neighbour relations to first cell 114a, e.g., based on a number of handover events from each of target cells 114b-e to first cell 114a (incoming direction). For instance, apparatus 122 may assign a priority index $Y^{in}_{target \to source}$ to each of the neighbour relations based on their importance in descending order (high index →less important neighbour).

At a fourth step, apparatus 122 determines a combined list of priorities of neighbour relations based at least on the first list and second list, wherein the combined list comprises total priority indices of neighbour relations between each of target cells 114b-f and first cell 114a. That is, apparatus 122 may take into account both neighbour relations, incoming and outgoing, and generate the combined list based on those. Therefore, neighbour relations may be assessed by taking into account relations from first cell 114a to target cells 114b-f, and relations from target cells 114b-f to first cell 114a.

In the example of FIGURE 2, the combined list comprises target cells 114b-d and target cell 114f, but not target cell 114e. That is, for example compared to a previously formed list target cell 114f may be added to the list while target cell 114e may be removed due to change in the topology of the network.

At a fourth step, apparatus 122 may configure neighbour relations for first cell 114a based on the combined list. For instance, apparatus 122 may configure a Neighbour Relation Table, NRT, for first cell 114a. Apparatus 122 may further use the neighbour relations of first cell 114a for at least one of mobility configuration, load balancing configuration or dual connectivity configuration. Alternatively, or in addition, apparatus 122 may use the neighbour relations for at least one of minimizing interference, improving handover performance, optimizing capacity or balancing user traffic.

In some embodiments, apparatus 122 may sort the first list and the second list and configure neighbour relations for first cell 114a based on the sorted first and second lists. That is, apparatus 122 may sort cells 114b-f in the first and second lists, generate the combined list based on the sorted first and second lists and then configure the neighbour relations based on the combined list. Hence, apparatus 122 may take into account importance of neighbour relations from first cell 114a to target cells 114b-f, and relations from target cells 114b-f to first cell 114a. In some embodiments, said sorting may further comprise sorting cells of the first list in a descending priority order and sorting cells of the second list in a descending priority order.

In some embodiments, apparatus 122 may assign the priority indices for each importance relation and then calculate the total priority for each of target cells 114b-f based on the priority indices. Apparatus 122 may further exploit the priority indices when generating the combined list, such that the combined list is based on the total priorities, and configure neighbour relations for first cell 114a based on the total priorities.

In some embodiments, apparatus 122 may for example multiply the priority indices associated with each of target cells 114b-f in the first list with the priority indices associated with each of target cells 114b-f in the second list, to calculate the total priorities for the combined list. Hence, apparatus 122 may determine the combined list of importance relations of first cell 114a based on the first list and second list, and configure neighbour relations for first cell 114a based on the combined list.

For instance, apparatus 122 may calculate the total priority (from the perspective of outgoing and incoming directions) by multiplying corresponding priority indices. Apparatus 122 may, e.g., calculate

$$Pr_{114b} = X^{out}_{114a \to 114b} * Y^{in}_{114b \to 114a} \quad ,$$

$Pr_{114c} = X^{out}_{114a \to 114c} * Y^{in}_{114c \to 114a}$, $Pr_{114d} = X^{out}_{114a \to 114d} * Y^{in}_{114d \to 114a}$ , etc., to generate the total priority $Pr$ for each target cell 114b-f. Target cells 114b-f may be then sorted for the combined list according to the total priority, such that the combined list comprises assessments of neighbour relations from both perspectives, from the perspective of first cell 114a and target cells 114b-f.

In some embodiments, apparatus 122 may then remove irrelevant neighbour cells from the neighbour relations of first cell 114a. In the example of FIGURE 2, apparatus 122 may determine that target cell 114e is an irrelevant neighbour cell, e.g., if the total priority of target cell 114e is below a threshold due to a recent change in the topology of the network. Alternatively, if a maximum number of neighbour cells to be considered as neighbour relations, e.g., in the NRT, is four in the example of FIGURE 2, apparatus 122 may determine that target cell 114e is an irrelevant neighbour cell because the maximum number of neighbour relations would be exceeded without removing one cell from neighbour relations and target cell 114e has the lowest total priority. It is noted that in practice the maximum number of neighbour cells may be for example 32, but four is used as an example in view of the example of FIGURE 2.

In some embodiments, apparatus 122 may configure an NRT of first cell 114a based on the combined list. For example, apparatus 122 may add to the NRT information of of target cells 114b-d and 114f, such as Physical Cell Identifiers, PCIs, Public Land Mobile Networks, PLMNs, Cell Global Identifiers, CGIs, and any other information of target cells 114b-d and 114f.

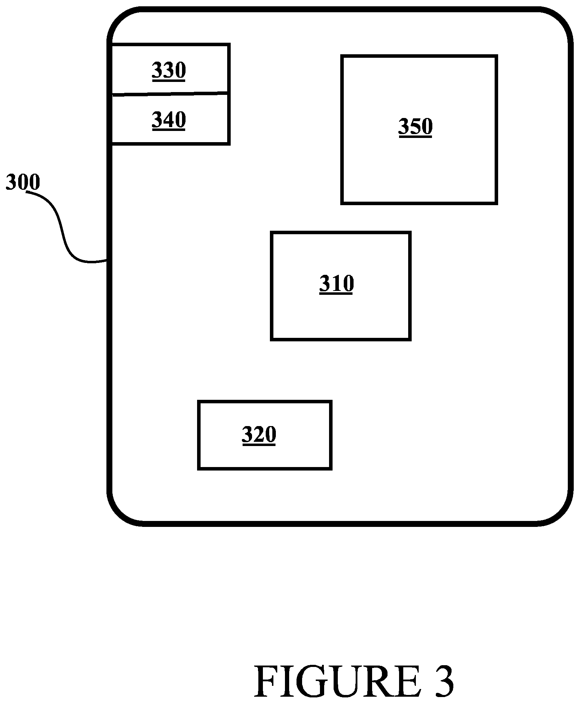

FIGURE 3 illustrates an example apparatus capable of supporting at least some embodiments. Illustrated is device 300, which may comprise, for example, apparatus 122 configured to perform the herein disclosed network optimization method. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. Processor 310 may comprise at least one AMD Opteron and/or Intel Xeon processor. Processor 310 may comprise at least one application-specific integrated circuit, ASIC. Processor 310 may comprise at least one field-programmable gate array, FPGA. Processor 310 may be means for performing method steps in device 300, and causing performance of the method steps, such as determining, sorting and/or configuring. Processor 310 may be configured, at least in part by computer instructions, to perform actions.

As used in this application, the term circuitry covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300. Memory 320 may be non-transitory.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with Ethernet and/or signalling system 7, SS7, standards, for example.

Device 300 may comprise user interface, UI, 350. UI 350 may comprise at least one of a display, a keyboard, a touchscreen, a vibrator arranged to signal to a user by causing device 300 to vibrate, a speaker and a microphone. A user may be able to operate device 300 via UI 350.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above.

Processor 310, memory 320, transmitter 330, receiver 340 and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

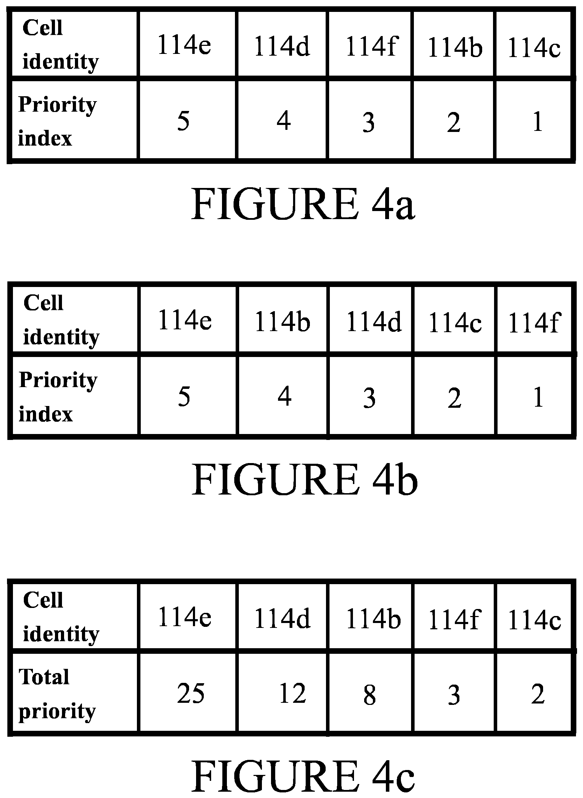

FIGURE 4a illustrates an example of a first list in accordance with at least some embodiments. The first list illustrated in FIGURE 4a comprise priority indices of neighbour relations from first cell 114a to each target cell 114b-f. In some embodiments, The first list may have the same form as an NRT, comprising at least PCI, PLMN and CGI of target cells 114b-f, but for the sake of simplicity only cell identities and priority indices are illustrated in FIGURE 4a.

In the example illustrated in FIGURE 4a, the priority index of a neighbour relation from first cell 114a to target cell 114e is 5, from first cell 114a to target cell 114d is 4, from first cell 114a to target cell 114f is 3, from first cell 114a to target cell 114b is 2 and from first cell 114a to target cell 114c is 1. Target cells 114b-f have been thus sorted in descending priority order, e.g., by apparatus 122. However, it is noted that such sorting might not be necessary if the cell identities and relations in the first list can be mapped to the cell identities and relations in the second list otherwise.

FIGURE 4b illustrates an example of a second list in accordance with at least some embodiments. The second list illustrated in FIGURE 4b comprises priority indices of neighbour relations from each target cell 114b-f to first cell 114a. The second list may also have the same form as an NRT, but for the sake of simplicity only cell identities and priority indices are illustrated in FIGURE 4c.

In the example illustrated in FIGURE 4a, the priority index of a neighbour relation from target cell 114e is 5 to first cell 114a, from target cell 114b to first cell 114a is 4, from target cell 114d to first cell 114a is 3, from target cell 114c to first cell 114a is 2 and from target cell 114f to first cell 114a is 1. The importance relations have been thus sorted in a descending order, as in case of the first list illustrated in FIGURE 4a.

FIGURE 4c illustrates an example of a combined list in accordance with at least some embodiments. The combined list illustrated in FIGURE 4c may generated based at least on the first list and the second list. That is, the combined list may be formed by taking into account priority indices from first cell 114a to each target cell 114b-f and from each target cells 114b-f to first cell 114a to. The combined list may also have the same form as an NRT, but for the sake of simplicity only cell identities and importance relations are illustrated in FIGURE 4c.

Apparatus 122 may determine the combined list illustrated in FIGURE 4 based on the first and second sorted lists illustrated in FIGURE 4a and FIGURE 4b, respectively. Apparatus 122 may for example calculate the total priority for each target cell 114b-f based on the priority indices and determine the combined list based at least on the total priorities.

Apparatus 122 may calculate the total priority by multiplying a priority associated with each target cell 114b-f in the first list with a priority index associated with each target cell 114b-f in the second list. That is, for target cell 114e $Pr_{114e} = 5 * 5 = 25$, target cell 114d $Pr_{114d} = 4 * 3 = 12$, target cell 114b $Pr_{114b} = 2 * 4 = 8$, target cell 114f $Pr_{114f} = 3 * 1 = 3$ and target cell 114c $Pr_{114c} = 1 * 2 = 2$. Apparatus 122 may hence determine based on the combined list that target cell 114e is irrelevant for neighbour relations of first cell 114a. Apparatus 122 may, based on said determination, remove target cell 114e from the NRT of first cell 114a. Alternatively, sorting may be done in ascending order and in such a case the cell with the lowest total priority would be the least relevant.

Embodiments of the present invention therefore enable assessing neighbour relations from both perspectives, from the perspective of first cell 114a and from the perspective of each target cell 114b-f. Also, it is possible to remove only those neighbour relations which are irrelevant from both directions (outgoing and incoming), like target cell 114e in the examples of FIGUREs 2 and 4. At the same time, it may be ensured that important relations are not removed from the configuration, thereby avoiding degradation of a Quality of Service, QoS, in the network. Consequently, assessment of neighbour relations is in general enhanced in cellular communication networks.

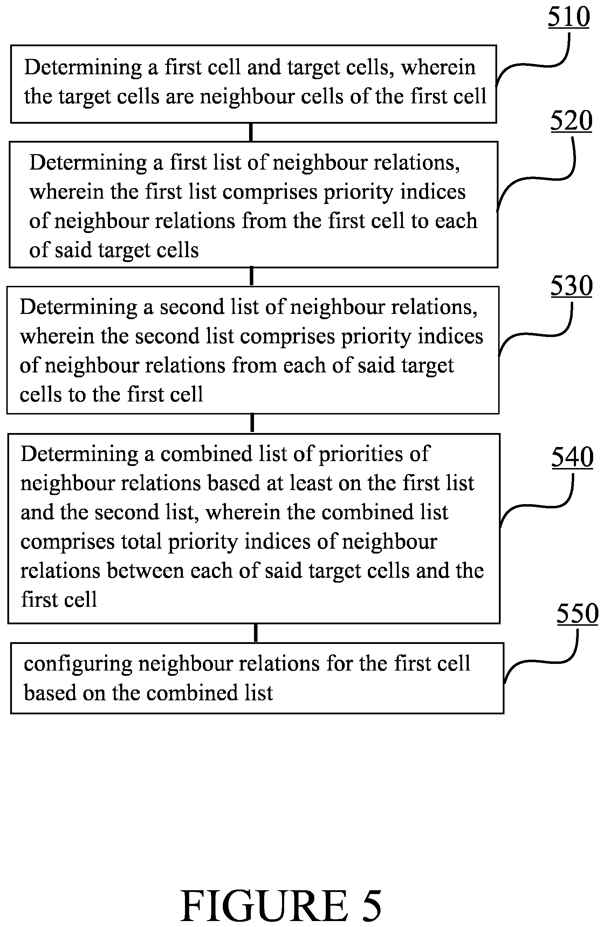

FIGURE 5 is a flow graph of a method in accordance with a claimed embodiment. The phases of the illustrated method may be performed for example by apparatus 122.

At phase 510, the method may comprise determining a first cell and target cells of the first cell, wherein the target cells are neighbour cells of the first cell. At phase 520, the method may comprise determining a first list of neighbour relations, wherein the first list comprises priority indices of neighbour relations from the first cell to each of said target cells. At phase 530, the method may comprise determining a second list of neighbour relations, wherein the second list comprises priority indices of neighbour relations from each of said target cells to the first cell. At phase 540, the method may comprise determining a combined list of priorities of neighbour relations based at least on the first list and the second list, wherein the combined list comprises total priority indices of neighbour relations between each of said target cells and the first cell. Finally, at phase 550, the method may comprise configuring neighbour relations for the first cell based on the combined list.

The combined list may refer to a list of priorities, not neighbours. A final priority for a first cell - target cell pair may be a combination of the first cell → target cell priority and the target cell → first cell priority. For example, priority from the first cell to the target cell may be 10, meaning that this particular target cell would be 10th from a perspective of a number of handover events. However, in the target cell → first cell direction, the first cell may be 1st, meaning that from the perspective of the target cell the most handover events would happen to that first cell. Thus, among multiple cell, this first cell would be the most important neighbour of this target cell.

Hence, there may be two priorities: 10 and 1 for the first pair of first cell A and target cell B. For another pair of first cell A and target cell C priorities may be 11 and 15. When considering which relations to remove, it may be assumed that relation should be removed in both ways. So for example by finding average priority, it may be determined that first pair (A, B) is to stay, whereas the second pair (A, C) with priorities 11 and 15 is removed.

INDUSTRIAL APPLICABILITY

At least some embodiments of the present invention find industrial application in cellular communication networks.

ACRONYMS LIST

| 3GPP | 3rd Generation Partnership Project |
|------|-----------------------------------|
| 5G | Fifth Generation |
| AMF | Access and Mobility management Function |
| BCCH | Broadcast Control Channel |
| BSIC | Base Station Identity Code |
| CGI | Cell Global Identifier |
| IoT | Internet of Things |
| MME | Mobility Management Entity |
| NR | New Radio |
| NRT | Neighbour Relation Table |
| OSS | Operations Support System |
| PCI | Physical Cell Identifier |
| PLMN | Public Land Mobile Networks |
| PM | Performance Management |
| QoS | Quality of Service |
| RAN | Radio Access Network |
| SC | Scrambling Code |
| UE | User Equipment |
| WLAN | Wireless Local Area Network |

REFERENCE SIGNS LIST

| 100 | Cellular communication network |
|------|-----------------------------------|
| 110 | Radio Access Network |
| 112 | Base station |
| 114a | First cells |
| 114b-d | Old target cells in the new list |
| 114e | Irrelevant target cell, not in the new list |
| 114f | New target cell, added to the new list |
| 116 | UE |
| 120 | Core network |
| 122 | Apparatus for network optimization |
| 300 - 360 | Structure of the device of FIGURE 3 |
| 510 - 550 | Phases of the method of FIGURE 5 |

**Claims**

1. A method for assessing neighbour relations in a cellular communication network (100), comprising:

- determining, by an apparatus (122), a first cell (114a) and target cells (114b-f) of the first cell (114a), wherein the target cells (114b-f) are neighbour cells of the first cell (114a), **characterized in that** the method further comprises:

- determining, by the apparatus (122), a first list of neighbour relations, wherein the first list comprises priority indices of neighbour relations from the first cell (114a) to each of said target cells (114b-f);

7

- determining, by the apparatus (122), a second list of neighbour relations, wherein the second list comprises priority indices of neighbour relations from each of said target cells (114b-f) to the first cell (114a);
- determining, by the apparatus (122), a combined list of priorities of neighbour relations based at least on the first list and the second list, wherein the combined list comprises total priority indices of neighbour relations between each of said target cells (114b-f) and the first cell (114a); and
- configuring, by the apparatus (122), neighbour relations for the first cell (114a) based on the combined list.

2. The method according to claim 1, wherein the first list comprises information about outgoing neighbour relations of the first cell (114a) and the second list comprises information about incoming neighbour relations of the first cell (114a).

3. The method according to claim 1 or claim 2, further comprising:

- sorting, by the apparatus (122), the first list and the second list; and
- determining, by the apparatus (122), the combined list based at least on the sorted first list and second list.

4. The method according to claim 3, wherein said sorting further comprises:

- sorting, by the apparatus (122), said target cells (114b-f) in the first list in a descending priority order; and
- sorting, by the apparatus (122), said target cells (114b-f) in the second list in a descending priority order.

5. The method according to any of the preceding claims, wherein said target cells (114b-f) are within one hop of the first cell (114a).

6. The method according to any of the preceding claims, further comprising:

- assigning, by the apparatus (122), the priority indices for each neighbour relation;
- calculating, by the apparatus (122), the total priority for each of said target cells (114b-f) based on the priority indices; and
- determining, by the apparatus (122), the combined list based at least on the total priorities.

7. The method according to claim 6, wherein said calculating the total priority for each of said target cells (114b-f) further comprises:

- multiplying, by the apparatus (122), the priority indices associated with each of said target cells (114b-f) in the first list with the priority indices associated with each of said target cells (114b-f) in the second list.

8. The method according to any of the preceding claims, wherein said configuring further comprises:

- removing, by the apparatus (122), irrelevant neighbour cells from the neighbour relations of the first cell (114a).

9. The method according to any of the preceding claims, wherein said configuring further comprises:

- configuring, by the apparatus (122), a neighbour relation table of the first cell (114a) based on the combined list.

10. The method according to any of the preceding claims, further comprising:

- using, by the apparatus (122), the neighbour relations of the first cell (114a) for at least one of mobility configuration, load balancing configuration or dual connectivity configuration.

11. The method according to any of claims 1 - 10, wherein the apparatus (122) is configured to operate in the cellular communication network (100) according to at least one standard specification of $3^{rd}$ generation partnership program.

12. An apparatus (122) comprising:

- means for determining a first cell (114a) and target cells (114b-f) of the first cell (114a), wherein the target cells (114b-f) are neighbour cells of the first cell (114a), **characterized in that** the apparatus further comprises:

- means for determining a first list of neighbour relations, wherein the first list comprises priority indices of neighbour relations from the first cell (114a) to each of said target cells (114b-f);
- means for determining a second list of neighbour relations, wherein the second list comprises priority indices of neighbour relations from each of said target cells (114b-f) to the first cell (114a);
- means for determining a combined list of priorities of neighbour relations based at least on the first list and the second list, wherein the combined list comprises total priority indices of neighbour relations between each of said target cells (114b-f) and the first cell (114a); and
- means for configuring neighbour relations for the first cell (114a) based on the combined list.

13. An apparatus (122) according to claim 12, further comprising means for performing the method according to any of claims 2 to 11.

14. A computer program comprising instructions which, when the program is executed by an apparatus (122), cause the apparatus (122) to carry out:

- determining a first cell (114a) and target cells (114b-f) of the first cell (114a), wherein the target cells (114b-f) are neighbour cells of the first cell (114a) **characterized in that** the apparatus (122) is further caused to carry out:

- determining a first list of neighbour relations, wherein the first list comprises priority indices of neighbour relations from the first cell (114a) to each of said target cells (114b-f);
- determining a second list of neighbour relations, wherein the second list comprises priority indices of neighbour relations from each of said target cells (114b-f) to the first cell (114a);
- determining a combined list of priorities of neighbour relations based at least on the first list and the second list, wherein the combined list comprises total priority indices of neighbour relations between each of said target cells (114b-f) and the first cell (114a); and
- configuring neighbour relations for the first cell (114a) based on the combined list.

15. A computer program according to claim 14, further comprising instructions which, when the program is executed by the apparatus (122), cause the apparatus (122) to carry out the method according to any of claims 2 to 11.

**Patentansprüche**

1. Verfahren zum Beurteilen von Nachbarbeziehungen in einem Mobilfunknetz (100), das Folgendes umfasst:

- Bestimmen durch eine Einrichtung (122) einer ersten Zelle (114a) und von Zielzellen (114b-f) der ersten Zelle (114a), wobei die Zielzellen (114b-f) Nachbarzellen der ersten Zelle (114a) sind, **dadurch gekennzeichnet, dass** das Verfahren weiter Folgendes umfasst:

- Bestimmen durch die Einrichtung (122) einer ersten Liste von Nachbarbeziehungen, wobei die erste Liste Prioritätsindizes von Nachbarbeziehungen von der ersten Zelle (114a) zu jeder der Zielzellen (114b-f) umfasst;
- Bestimmen durch die Einrichtung (122) einer zweiten Liste von Nachbarbeziehungen, wobei die zweite Liste Prioritätsindizes von Nachbarbeziehungen von jeder der Zielzellen (114b-f) zu der ersten Zelle (114a) umfasst;
- Bestimmen durch die Einrichtung (122) einer kombinierten Liste von Prioritäten von Nachbarbeziehungen, basierend mindestens auf der ersten und der zweiten Liste, wobei die kombinierte Liste die Gesamtprioritätsindizes von Nachbarbeziehungen zwischen jeder der Zielzellen (114b-f) und der ersten Zelle (114a) umfasst; und
- Konfigurieren durch die Einrichtung (122) von Nachbarbeziehungen für die erste Zelle (114a) basierend auf der kombinierten Liste.

2. Verfahren nach Anspruch 1, wobei die erste Liste Informationen über ausgehende Nachbarbeziehungen der ersten Zelle (114a) umfasst und die zweite Liste Informationen über eingehende Nachbarbeziehungen der ersten Zelle (114a) umfasst.

3. Verfahren nach Anspruch 1 oder 2, das weiter Folgendes umfasst:

- Sortieren durch die Einrichtung (122), der ersten Liste und der zweiten Liste; und

- Bestimmen durch die Einrichtung (122) der kombinierten Liste basierend mindestens auf der sortierten ersten Liste und der zweiten Liste.

4. Verfahren nach Anspruch 3, wobei das Sortieren weiter Folgendes umfasst:

- Sortieren durch die Einrichtung (122) der Zielzellen (114b-f) der ersten Liste in einer absteigenden Prioritätsreihenfolge; und
- Sortieren durch die Einrichtung (122) der Zielzellen (114b-f) in der zweiten Liste in einer absteigenden Prioritätsreihenfolge.

5. Verfahren nach einem der vorstehenden Ansprüche, wobei sich die Zielzellen (114b-f) innerhalb eines Hops von der ersten Zelle (114a) befinden.

6. Verfahren nach einem der vorstehenden Ansprüche, das weiter Folgendes umfasst:

- Zuweisen durch die Einrichtung (122) der Prioritätsindizes für jede Nachbarbeziehung;
- Berechnen durch die Einrichtung (122) der Gesamtpriorität für jede der Zielzellen (114b-f) basierend auf den Prioritätsindizes; und
- Bestimmen durch die Einrichtung (122) der kombinierten Liste basierend mindestens auf Gesamtprioritäten.

7. Verfahren nach Anspruch 6, wobei das Berechnen der Gesamtpriorität für jede der Zielzellen (114b-f) weiter Folgendes umfasst:

- Multiplizieren durch die Einrichtung (122) der Prioritätsindizes, die jeder der Zielzellen (114b-f) zugeordnet ist, in der ersten Liste mit den Prioritätsindizes jeder der Zielzellen (114b-f) in der zweiten Liste.

8. Verfahren nach einem der vorstehenden Ansprüche, wobei das Konfigurieren weiter Folgendes umfasst:

- Entfernen durch die Einrichtung (122) irrelevanter Nachbarzellen aus den Nachbarbeziehungen der ersten Zelle (114a).

9. Verfahren nach einem der vorstehenden Ansprüche, wobei das Konfigurieren weiter Folgendes umfasst:

- Konfigurieren durch die Einrichtung (122) einer Nachbarbeziehungstabelle der ersten Zelle (114a) basierend auf der kombinierten Liste.

10. Verfahren nach einem der vorstehenden Ansprüche, das weiter Folgendes umfasst:

- unter Verwendung der Nachbarbeziehungen der ersten Zelle (114a) durch die Einrichtung (122) für mindestens eine von Mobilitätskonfiguration, Lastabgleichkonfiguration oder dualer Konnektivitätskonfiguration.

11. Verfahren nach einem der Ansprüche 1-10, wobei die Einrichtung (122) dazu konfiguriert ist, in dem Mobilfunknetzwerk (100) gemäß mindestens einer Standardspezifikation des Partnerschaftsprogramms der 3. Generation zu arbeiten.

12. Einrichtung (122), die Folgendes umfasst:

- Mittel zum Bestimmen einer ersten Zelle (114a) und von Zielzellen (114b-f) der ersten Zelle (114a), wobei die Zielzellen (114b-f) Nachbarzellen der ersten Zelle (114a) sind, **dadurch gekennzeichnet, dass** die Einrichtung weiter Folgendes umfasst:

- Mittel zum Bestimmen einer ersten Liste von Nachbarbeziehungen, wobei die erste Liste Prioritätsindizes von Nachbarbeziehungen von der ersten Zelle (114a) zu jeder der Zielzellen (114b-f) umfasst;
- Mittel zum Bestimmen einer zweiten Liste von Nachbarbeziehungen, wobei die zweite Liste Prioritätsindizes von Nachbarbeziehungen von jeder der Zielzellen (114b-f) zu der ersten Zelle (114a) umfasst;
- Mittel zum Bestimmen einer kombinierten Liste von Prioritäten von Nachbarbeziehungen, basierend mindestens auf der ersten und der zweiten Liste, wobei die kombinierte Liste die Gesamtprioritätsindizes von Nachbarbeziehungen zwischen jeder der Zielzellen (114b-f) und der ersten Zelle (114a) umfasst; und

- Mittel zum Konfigurieren von Nachbarbeziehungen für die erste Zelle (114a) basierend auf der kombinierten Liste.

13. Einrichtung (122) nach Anspruch 12, die weiter Mittel zum Durchführen des Verfahrens nach einem der Ansprüche 2 bis 11 umfasst.

14. Computerprogramm, das Anweisungen umfasst, die, wenn das Programm durch eine Einrichtung (122) durchgeführt wird, die Einrichtung (122) dazu veranlassen, Folgendes auszuführen:

- Bestimmen einer ersten Zelle (114a) und Zielzellen (114b-f) der ersten Zelle (114a), wobei die Zielzellen (114b-f) Nachbarzellen der ersten Zelle (114a) sind, **dadurch gekennzeichnet, dass** die Einrichtung (122) weiter zum Ausführen von Folgendem veranlasst wird:

- Bestimmen einer ersten Liste von Nachbarbeziehungen, wobei die erste Liste Prioritätsindizes von Nachbarbeziehungen von der ersten Zelle (114a) zu jeder der Zielzellen (114b-f) umfasst;

- Bestimmen einer zweiten Liste von Nachbarbeziehungen, wobei die zweite Liste Prioritätsindizes von Nachbarbeziehungen von jeder der Zielzellen (114b-f) zu der ersten Zelle (114a) umfasst;
- Bestimmen einer kombinierten Liste von Prioritäten von Nachbarbeziehungen, basierend mindestens auf der ersten Liste und der zweiten Liste, wobei die kombinierte Liste die Gesamtprioritätsindizes von Nachbarbeziehungen zwischen jeder der Zielzellen (114b-f) und der ersten Zelle (114a) umfasst; und
- Konfigurieren von Nachbarbeziehungen für die erste Zelle (114a) basierend auf der kombinierten Liste.

15. Computerprogramm nach Anspruch 14, das weiter Anweisungen umfasst, die, wenn das Programm von der Einrichtung (122) durchgeführt wird, die Einrichtung (122) veranlassen, das Verfahren nach einem der Ansprüche 2 bis 11 durchzuführen.

**Revendications**

1. Procédé d'évaluation de relations de voisinage dans un réseau de communication cellulaire (100), comprenant :

- la détermination, par un appareil (122), d'une première cellule (114a) et de cellules cibles (114b-f) de la première cellule (114a), dans lequel les cellules cibles (114b-f) sont des cellules voisines de la première cellule (114a), **caractérisé en ce que** le procédé comprend en outre :

- la détermination, par l'appareil (122), d'une première liste de relations de voisinage, dans lequel la première liste comprend des indices de priorité de relations de voisinage de la première cellule (114a) vers chacune desdites cellules cibles (114b-f) ;
- la détermination, par l'appareil (122), d'une deuxième liste de relations de voisinage, dans lequel la deuxième liste comprend des indices de priorité de relations de voisinage de chacune desdites cellules cibles (114b-f) vers la première cellule (114a) ;
- la détermination, par l'appareil (122), d'une liste combinée de priorités de relations de voisinage sur la base au moins de la première liste et de la deuxième liste, dans lequel la liste combinée comprend des indices de priorité totaux de relations de voisinage entre chacune desdites cellules cibles (114b-f) et la première cellule (114a) ; et
- la configuration, par l'appareil (122), de relations de voisinage pour la première cellule (114a) sur la base de la liste combinée.

2. Procédé selon la revendication 1, dans lequel la première liste comprend des informations sur des relations de voisinage sortantes de la première cellule (114a) et la deuxième liste comprend des informations sur des relations de voisinage entrantes de la première cellule (114a).

3. Procédé selon la revendication 1 ou la revendication 2, comprenant en outre :

- le tri, par l'appareil (122), de la première liste et la deuxième liste ; et
- la détermination, par l'appareil (122), de la liste combinée sur la base au moins de la première liste et de la deuxième liste triées.

4. Procédé selon la revendication 3, dans lequel le tri comprend en outre :

  - le tri, par l'appareil (122), desdites cellules cibles (114b-f) dans la première liste par ordre de priorité décroissant ; et
  - le tri, par l'appareil (122), desdites cellules cibles (114b-f) dans la deuxième liste par ordre de priorité décroissant.

5. Procédé selon l'une quelconque des revendications précédentes, dans lequel lesdites cellules cibles (114b-f) sont à un saut de la première cellule (114a).

6. Procédé selon l'une quelconque des revendications précédentes, comprenant en outre :

  - l'attribution, par l'appareil (122), des indices de priorité pour chaque relation de voisinage ;
  - le calcul, par l'appareil (122), de la priorité totale pour chacune desdites cellules cibles (114b-f) sur la base des indices de priorité ; et
  - la détermination, par l'appareil (122), de la liste combinée sur la base au moins des priorités totales.

7. Procédé selon la revendication 6, dans lequel ledit calcul de la priorité totale pour chacune desdites cellules cibles (114b-f) comprend en outre :

  - la multiplication, par l'appareil (122), des indices de priorité associés à chacune desdites cellules cibles (114b-f) dans la première liste par les indices de priorité associés à chacune desdites cellules cibles (114b-f) dans la deuxième liste.

8. Procédé selon l'une quelconque des revendications précédentes, dans lequel ladite configuration comprend en outre :

  - la suppression, par l'appareil (122), de cellules voisines non pertinentes des relations de voisinage de la première cellule (114a).

9. Procédé selon l'une quelconque des revendications précédentes, dans lequel ladite configuration comprend en outre :

  - la configuration, par l'appareil (122), d'une table de relations de voisinage pour la première cellule (114a) sur la base de la liste combinée.

10. Procédé selon l'une quelconque des revendications précédentes, comprenant en outre :

  - l'utilisation, par l'appareil (122), des relations de voisinage de la première cellule (114a) pour au moins une parmi une configuration de mobilité, une configuration d'équilibrage de charge ou une configuration de double connectivité.

11. Procédé selon l'une quelconque des revendications 1-10, dans lequel l'appareil (122) est configuré pour fonctionner dans le réseau de communication cellulaire (100) selon au moins une spécification standard d'un programme de partenariat de 3ème génération.

12. Appareil (122) comprenant :

  - des moyens pour déterminer une première cellule (114a) et de cellules cibles (114b-f) de la première cellule (114a), dans lequel les cellules cibles (114b-f) sont des cellules voisines de la première cellule (114a), **caractérisé en ce que** l'appareil comprend en outre :

    - des moyens pour déterminer une première liste de relations de voisinage, dans lequel la première liste comprend des indices de priorité de relations de voisinage de la première cellule (114a) vers chacune desdites cellules cibles (114b-f) ;
    - des moyens pour déterminer une deuxième liste de relations de voisinage, dans lequel la deuxième liste comprend des indices de priorité de relations de voisinage de chacune desdites cellules cibles (114b-f) vers la première cellule (114a) ;

- des moyens pour déterminer une liste combinée de priorités de relations de voisinage sur la base au moins de la première liste et de la deuxième liste, dans lequel la liste combinée comprend des indices de priorité totaux de relations de voisinage entre chacune desdites cellules cibles (114b-f) et la première cellule (114a) ; et

- des moyens pour configurer des relations de voisinage pour la première cellule (114a) sur la base de la liste combinée.

13. Appareil (122) selon la revendication 12, comprenant en outre des moyens pour réaliser le procédé selon l'une quelconque des revendications 2 à 11.

14. Programme informatique comprenant des instructions qui, lorsque le programme est exécuté par un appareil (122), amènent l'appareil (122) à réaliser :

- la détermination d'une première cellule (114a) et de cellules cibles (114b-f) de la première cellule (114a), dans lequel les cellules cibles (114b-f) sont des cellules voisines de la première cellule (114a), **caractérisé en ce que** l'appareil (122) est en outre amené à réaliser :

- la détermination d'une première liste de relations de voisinage, dans lequel la première liste comprend des indices de priorité de relations de voisinage de la première cellule (114a) vers chacune desdites cellules cibles (114b-f) ;
- la détermination d'une deuxième liste de relations de voisinage, dans lequel la deuxième liste comprend des indices de priorité de relations de voisinage de chacune desdites cellules cibles (114b-f) vers la première cellule (114a) ;
- la détermination d'une liste combinée de priorités de relations de voisinage sur la base au moins de la première liste et de la deuxième liste, dans lequel la liste combinée comprend des indices de priorité totaux de relations de voisinage entre chacune desdites cellules cibles (114b-f) et la première cellule (114a) ; et
- la configuration de relations de voisinage pour la première cellule (114a) sur la base de la liste combinée.

15. Programme informatique selon la revendication 14, comprenant en outre des instructions qui, lorsque le programme est exécuté par l'appareil (122), amènent l'appareil (122) à réaliser le procédé selon l'une quelconque des revendications 2 à 11.

FIGURE 1

114f

114b

114a

114e

114c

114d

# FIGURE 2

330

340

350

300

310

320

FIGURE 3

| Cell identity | 114e | 114d | 114f | 114b | 114c |
|---|---|---|---|---|---|
| Priority index | 5 | 4 | 3 | 2 | 1 |

# FIGURE 4a

| Cell identity | 114e | 114b | 114d | 114c | 114f |
|---|---|---|---|---|---|
| Priority index | 5 | 4 | 3 | 2 | 1 |

# FIGURE 4b

| Cell identity | 114e | 114d | 114b | 114f | 114c |
|---|---|---|---|---|---|
| Total priority | 25 | 12 | 8 | 3 | 2 |

# FIGURE 4c

510

Determining a first cell and target cells, wherein the target cells are neighbour cells of the first cell

520

Determining a first list of neighbour relations, wherein the first list comprises priority indices of neighbour relations from the first cell to each of said target cells

530

Determining a second list of neighbour relations, wherein the second list comprises priority indices of neighbour relations from each of said target cells to the first cell

540

Determining a combined list of priorities of neighbour relations based at least on the first list and the second list, wherein the combined list comprises total priority indices of neighbour relations between each of said target cells and the first cell

550

configuring neighbour relations for the first cell based on the combined list

# FIGURE 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007242622 A1
- US 2011201332 A1
- US 2015148042 A1
- EP 3979688 A1